# FASCICULE DE BREVET EUROPEEN

(11) **EP 2 115 559 B1**
(45) Date de publication et mention de la délivrance du brevet: **29.07.2020**
(21) Numéro de dépôt: 07872418.4
(22) Date de dépôt: 20.12.2007
(51) Int. Cl.: G06F 9/451, G06F 3/0481

(54) **DISPOSITIF D'ANALYSE DE GRANDEURS VARIABLES PAR MULTI- FENÊTRAGE SIMULTANÉ**
VORRICHTUNG ZUR ANALYSE VERSCHIEDENER GRÖSSEN DURCH SIMULTANE ANZEIGE IN MEHREREN FENSTERN
DEVICE FOR ANALYSING VARIABLE MAGNITUDES BY SIMULTANEOUS MULTIPLE WINDOWING

(30) Priorité: 29.12.2006 FR 0611525
(43) Date de publication de la demande: 11.11.2009
(73) Titulaire: Tzara, Wally, 75007 Paris (FR)
(72) Inventeur: Tzara, Wally, 75007 Paris (FR)
(86) Numéro de dépôt international: PCT/FR2007/002133
(87) Numéro de publication internationale: WO 2008/096063

(56) Documents cités:
- EP-A- 0 740 246
- US-A- 4 845 653
- US-A1- 2004 027 376
- US-A1- 2006 123 355

## Description

L'invention concerne les dispositifs d'analyse de fichiers de données représentatives de grandeurs variant dans le temps, destinés à être implantés dans un équipement informatique muni d'au moins un microprocesseur de traitement de données, comme par exemple un ordinateur, éventuellement portable.

L'invention concerne tout type de grandeur dont la valeur est susceptible d'évoluer au cours du temps, comme par exemple la position d'un objet, la température ou la pression (éventuellement atmosphérique) en un endroit donné, le cours d'une action, ou le prix d'un produit.

Par ailleurs, on entend ici par « dispositif d'analyse » un dispositif permettant d'afficher sous forme graphique, sur au moins un écran d'un équipement informatique, dans des fenêtres d'affichage différentes (éventuellement regroupées à l'intérieur d'une « sur-fenêtre » commune), une ou plusieurs représentations identiques ou différentes de grandeurs identiques ou différentes sur des plages temporelles choisies.

On entend ici par « représentation » la représentation de l'évolution d'une grandeur au cours du temps, associée à des éléments graphiques dérivés. Par exemple, on peut représenter la valeur d'un paramètre (tel que la température en un lieu) rapportée toutes les heures et une moyenne mobile de cette valeur, ou bien le cours d'une action rapporté toutes les minutes et une moyenne mobile de ce cours.

Un dispositif d'analyse du type précité se présente généralement sous la forme de modules logiciels (ou informatiques), mais il peut également se présenter sous la forme de circuits électroniques, ou d'une combinaison de circuits et de logiciels. Il peut être installé dans un équipement informatique par exemple par téléchargement via un serveur ou bien par chargement à partir d'un support de stockage, tel qu'un disque à lecture optique (CD-ROM ou DVD-ROM), un disque magnéto-optique ou une clé USB.

Ce type de dispositif d'analyse comprend généralement un outil d'administration permettant de définir des fenêtres d'affichage destinées chacune à afficher une représentation d'une grandeur sélectionnée, et associées chacune à un premier outil permettant de sélectionner une grandeur parmi plusieurs et à un deuxième outil permettant de sélectionner au moins une référence temporelle (comme par exemple l'instant de fin et/ou l'instant de début d'une fenêtre d'affichage), ainsi qu'éventuellement à un autre (« quatrième ») outil permettant de sélectionner une représentation parmi plusieurs de la grandeur sélectionnée.

Chacun de ces premier, deuxième et quatrième outils se présente par exemple sous la forme d'un menu ou d'une case de saisie ou d'un bouton déroulant, ou d'une barre ou de bouton(s) de commande de défilement.

Comme le sait l'homme de l'art, l'un des objectifs d'un dispositif d'analyse du type décrit ci-avant est de permettre à un utilisateur de confronter des représentations éventuellement différentes de grandeurs éventuellement différentes, et d'effectuer des opérations de contrôle dites « fondamentales » au moyen de ses premiers et deuxièmes outils, afin d'afficher un jeu de fenêtres dit « cohérent », également appelé « configuration cohérente ».

On entend ici par « configuration cohérente » une configuration permettant d'atteindre l'un au moins des deux objectifs mentionnés ci-dessous, par exemple dans le but de déterminer d'éventuelles corrélations et/ou d'éventuels phénomènes ou comportements :
- comparer entre elles jusqu'à un même instant final et/ou à partir d'un même instant initial au moins deux représentations identiques de grandeurs différentes,
- confronter au moins deux représentations différentes d'une même grandeur jusqu'à un même instant final et/ou à partir d'un même instant initial.

L'obtention d'un même instant final précis et/ou d'un même instant initial précis sur des fenêtres d'affichage différentes au moyen des premiers et deuxièmes outils associés à ces dernières est une opération difficile et consommatrice de temps et d'attention, en raison de la nécessité de répéter un grand nombre de fois les opérations de contrôle de ces outils et de l'imprécision du contrôle du deuxième outil, en particulier lorsqu'il se présente sous la forme d'une barre et/ou de(s) bouton(s) de commande de défilement.

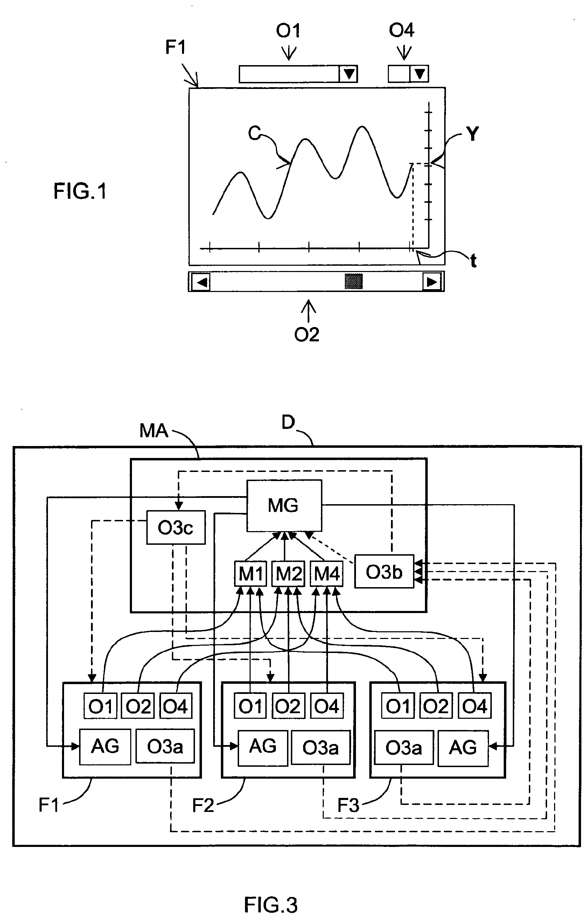

Afin de mieux comprendre les opérations qui doivent être effectuées par un utilisateur pour atteindre l'un des objectifs précités avec un dispositif d'analyse de l'art antérieur, on décrit ci-après un exemple en référence aux figures 1 (fenêtre d'affichage) et 2 (configurations successives et opérations).

Dans cet exemple, l'utilisateur (U) a initialement sélectionné des représentations de quatre grandeurs différentes et souhaite obtenir une configuration cohérente rapportée à un instant final t. Les états initiaux des quatre fenêtres d'affichage Fi (dans lesquelles sont affichées les représentations de ces quatre grandeurs différentes) sont notés Eij (E11 (C11, t1, Y11), E21 (C21, t2, Y21), E31 (C31, t3, Y31), et E41 (C41, t4, Y41), où Cij désigne une représentation d'une grandeur sélectionnée dans la fenêtre d'affichage Fi, tk désigne la référence temporelle (par exemple l'instant final) de la fenêtre d'affichage Fi, et Yij désigne la valeur de la grandeur Cij à l'instant final tk). Par ailleurs, un ensemble de quatre états Eij constitue une configuration An. L'objectif est donc ici de passer de la configuration A1 (E11, E21, E31, E41) à la configuration cohérente A4 (E12, E22, E31, E42).

Pour ce faire, l'utilisateur doit par exemple effectuer les opérations de contrôle suivantes, au moyen des premiers et deuxièmes outils associés aux quatre fenêtres d'affichage Fi :
- sélections S2 et S4 de deux nouvelles grandeurs C22 et C42 dans les fenêtres F2 et F4, au moyen des premiers outils qui leurs sont associés. Cela fournit une deuxième configuration A2 (E11 (C11, t1, Y11), E'21 (C22, t2, Y22), E31 (C31, t3, Y31), et E'41 (C42, t4, Y42)) ;
- sélection D1 de la référence temporelle t dans la fenêtre F1 placée dans l'état E11 et associée à la grandeur C11. Cela fournit une troisième configuration A3 (E12 (C11, t, Y12), E'21 (C22, t2, Y22), E31 (C31, t3, Y31), et E'41 (C42, t4, Y42)) ;
- sélections successives D2 et D4 des références temporelles dans les fenêtres F2 et F4, respectivement placées dans les états E'21 et E'41 et respectivement associées aux grandeurs C22 et C42, jusqu'à obtenir la référence temporelle t de la fenêtre F1. Cela fournit la quatrième configuration cohérente A4 (E12 (C11, t, Y12), E22 (C22, t, Y23), E31 (C31, t3, Y31), et E42 (C42, t, Y43)), laquelle configuration cohérente est référencée (O) sur les figures.

Plus le nombre de fenêtres d'affichage est élevé, plus l'utilisateur doit effectuer des opérations de contrôle au moyen des premiers et deuxièmes outils associés à ces fenêtres d'affichage de manière à obtenir une éventuelle configuration cohérente.

Le document US 2004/027376 décrit un procédé pour afficher des données sur une pluralité de vues d'interfaces utilisateur en initialisant un temps sur une vue et en préservant un temps de référence sur les vues. Le document 2006/123355 décrit un procédé d'analyse d'informations permettant d'interagir avec plusieurs vues relatives à des données simultanément et d'évaluer ces vues en conséquence.

L'invention a donc pour but d'améliorer la situation.

Elle propose à cet effet un dispositif d'analyse de fichiers de données (représentatives de valeurs prises par des grandeurs variant dans le temps), du type de celui présenté dans la partie d'introduction et comprenant un troisième outil de liaison en complément de l'outil d'administration de fenêtres d'affichage, des premiers outils de sélection de grandeur et des deuxièmes outils de sélection de référence(s) temporelle(s) [ainsi que des éventuels quatrièmes outils de sélection de représentation de grandeur], associés aux différentes fenêtres d'affichage. Ce troisième outil de liaison permet à un utilisateur, qui a sélectionné plusieurs représentations de grandeurs et les références temporelles associées, de sélectionner au moins deux des fenêtres d'affichage des grandeurs sélectionnées. Ce troisième outil de liaison est par ailleurs chargé de lier ensemble les premiers outils et/ou les deuxièmes outils des fenêtres d'affichage sélectionnées afin que chaque fois que l'utilisateur sélectionne une grandeur au moyen de l'un des premiers outils liés, alors dit maître et associé à une fenêtre d'affichage maîtresse, cela induise la sélection de la même grandeur par l'outil d'administration au niveau de chaque fenêtre d'affichage dite esclave, et/ou que chaque fois que l'utilisateur sélectionne une référence temporelle au moyen de l'un des deuxièmes outils liés, alors dit maître et associé à une fenêtre d'affichage maîtresse, cela induise la sélection de la même référence temporelle par l'outil d'administration au niveau de chaque fenêtre d'affichage esclave.

Le dispositif d'analyse selon l'invention peut comporter d'autres caractéristiques qui peuvent être prises séparément ou en combinaison, et notamment :
- son troisième outil de liaison peut être chargé, lorsqu'une sélection d'une grandeur a été effectuée par l'utilisateur au moyen d'un premier outil lié maître, d'induire une sélection de grandeur identique par l'outil d'administration au niveau de chaque fenêtre d'affichage esclave, ainsi que la sélection par l'outil d'administration de la référence temporelle de l'une des fenêtres d'affichage sélectionnées au niveau de chaque fenêtre d'affichage esclave ;
- en variante, son troisième outil de liaison peut être chargé, lorsqu'une sélection d'une grandeur a été effectuée par l'utilisateur au moyen d'un premier outil lié maître, d'induire une sélection de grandeur identique par l'outil d'administration au niveau de chaque fenêtre d'affichage esclave, ainsi que l'utilisation par l'outil d'administration du dernier instant connu de chaque grandeur sélectionnée comme référence temporelle au niveau de chacune desdites fenêtres d'affichage sélectionnées ;
- son troisième outil de liaison peut être chargé de provoquer l'utilisation de la référence temporelle de la fenêtre d'affichage maîtresse par chaque fenêtre d'affichage esclave ;
- en variante, son troisième outil de liaison peut être chargé de provoquer l'utilisation de la référence temporelle la plus récente parmi celles des fenêtres d'affichage sélectionnées au moyen des deuxièmes outils liés ;
- chaque référence temporelle peut par exemple être choisie parmi l'instant de début de la fenêtre d'affichage et l'instant de fin de la fenêtre d'affichage ;
- son troisième outil de liaison peut être chargé, lorsque des premiers outils de fenêtres d'affichage sélectionnées ont été liés, de provoquer la suppression de l'affichage des premiers outils esclaves liés, ces derniers étant alors représentés par le premier outil maître lié ;
- son troisième outil de liaison peut être chargé, lorsque des deuxièmes outils de fenêtres d'affichage sélectionnées ont été liés, de provoquer la suppression de l'affichage des deuxièmes outils esclaves liés, ces derniers étant alors représentés par le deuxième outil maître lié ;
- en variante, son troisième outil de liaison peut être chargé, lorsque des premiers outils et/ou des deuxièmes outils de fenêtres d'affichage sélectionnées ont été liés, de provoquer la modification de l'aspect de chaque fenêtre d'affichage sélectionnée et/ou la modification de l'aspect de chaque premier outil lié et/ou de chaque deuxième outil lié ;
- dans une autre variante, son troisième outil de liaison peut être chargé, lorsque des premiers outils et/ou des deuxièmes outils de fenêtres d'affichage sélectionnées ont été liés, de provoquer la modification de l'aspect des fenêtres d'affichage esclaves et/ou la modification de l'aspect et l'inactivation temporaire de chaque premier outil esclave lié et/ou de chaque deuxième outil esclave lié ;
- son troisième outil de liaison peut être chargé, en cas de désélection des fenêtres d'affichage maîtresse et esclaves, d'interrompre les liaisons correspondantes entre premiers outils et/ou entre deuxièmes outils ;
   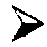 son troisième outil de liaison peut être chargé, après interruption des liaisons correspondantes entre premiers outils liés et/ou entre deuxièmes outils liés, de provoquer le rétablissement de la référence temporelle qui a été sélectionnée avant l'établissement de la liaison de chaque grandeur au niveau de chacun des deuxièmes outils précédemment liés ;
   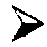 en variante, son troisième outil de liaison peut être chargé, après interruption des liaisons correspondantes entre premiers outils liés et/ou entre deuxièmes outils liés, de provoquer la sélection de la dernière référence temporelle connue de chaque grandeur au niveau de chacun des deuxièmes outils précédemment liés.

L'invention propose également un support de stockage, destiné à être connecté à un équipement informatique, et stockant un dispositif d'analyse du type de celui présenté ci-avant et agencé sous la forme de programme(s).

D'autres caractéristiques et avantages de l'invention apparaîtront à l'examen de la description détaillée ci-après, et des dessins annexés, sur lesquels :
- la figure 1 illustre de façon très schématique un exemple de fenêtre d'affichage et les premier, deuxième et quatrième outils associés, générés par un dispositif d'analyse de l'art antérieur,
- la figure 2 illustre de façon très schématique un exemple de configurations successives et de suite d'opérations nécessaires à l'obtention d'une configuration cohérente dans le cas d'un dispositif d'analyse de l'art antérieur,
- la figure 3 illustre de façon très schématique et fonctionnelle un exemple de réalisation d'un dispositif d'analyse selon l'invention,
- la figure 4 illustre de façon très schématique un premier exemple d'affichage sur un écran (EC) de quatre fenêtres d'affichage au moyen d'un dispositif d'analyse selon l'invention, trois de ces fenêtres d'affichage (F1, F2 et F4) étant liées,
- la figure 5 illustre de façon très schématique un premier exemple de configurations successives et de suite d'opérations nécessaires à l'obtention d'une configuration cohérente dans le cas d'un dispositif d'analyse selon l'invention,
- la figure 6 illustre de façon très schématique un second exemple d'affichage sur un écran (EC) de quatre fenêtres d'affichage au moyen d'un dispositif d'analyse selon l'invention, trois de ces fenêtres d'affichage (F1, F2 et F4) étant liées, et
- la figure 7 illustre de façon très schématique un second exemple de configurations successives et de suite d'opérations nécessaires à l'obtention d'une configuration cohérente dans le cas d'un dispositif d'analyse selon l'invention.

Les dessins annexés pourront non seulement servir à compléter l'invention, mais aussi contribuer à sa définition, le cas échéant.

L'invention a pour objet de faciliter l'obtention par un utilisateur d'une configuration cohérente de fenêtres d'affichage, au moyen d'un dispositif d'analyse de fichiers de données représentatives de grandeurs pouvant varier dans le temps.

Dans ce qui suit, on considère à titre d'exemple non limitatif que les grandeurs à afficher sont des cours d'actions. Mais, l'invention concerne tout type de grandeur dont la valeur est susceptible d'évoluer au cours du temps, et notamment la position d'un objet, ou la température ou la pression (éventuellement atmosphérique) en un endroit donné, ou encore le prix d'un produit.

On se réfère tout d'abord à la figure 3 pour présenter un exemple de réalisation d'un dispositif d'analyse D selon l'invention.

Comme indiqué dans la partie d'introduction, le dispositif d'analyse D est destiné à permettre l'affichage sous une forme graphique, sur au moins un écran (EC) d'un équipement informatique et dans des fenêtres d'affichage (Fi) différentes (au moins deux (i ≥ 2), éventuellement regroupées à l'intérieur d'une « sur-fenêtre » commune), d'une ou plusieurs représentations identiques ou différentes de grandeurs Cij identiques ou différentes sur des plages temporelles choisies identiques ou différentes.

Dans l'exemple illustré on n'a représenté que trois fenêtres F1 à F3, mais le dispositif D est destiné à en gérer au moins deux.

Ce type de dispositif D est destiné à être installé dans un équipement informatique pourvu d'au moins un microprocesseur de traitement de données, d'au moins un écran d'affichage (EC), de moyens de stockage et d'une interface homme/machine (clavier, souris et analogues). Cet équipement informatique peut par exemple être un (micro-)ordinateur, éventuellement portable (ou mobile).

Ce dispositif d'analyse D est préférentiellement réalisé sous la forme de modules logiciels (ou informatiques). Mais il peut également se présenter sous la forme de circuits électroniques, ou d'une combinaison de circuits et de logiciels, comme par exemple une carte vidéo spécialisée à plusieurs sorties.

Lorsqu'il est réalisé sous la forme de modules logiciels, il peut par exemple être installé dans l'équipement informatique par téléchargement via un serveur ou bien par chargement à partir d'un support de stockage, tel qu'un disque à lecture optique (CD-ROM ou DVD-ROM), un disque magnéto-optique ou une clé USB, sur lequel (laquelle) il est stocké.

Le dispositif d'analyse D comprend tout d'abord un outil MA de gestion de fenêtres d'affichage Fi. Cet outil d'administration MA est chargé de définir des fenêtres d'affichage Fi qui sont destinées chacune à afficher la représentation d'une grandeur Cij sélectionnée par l'utilisateur de l'équipement informatique dans lequel il est installé, au moyen de son interface homme/machine. Il est important de noter que la représentation d'une grandeur Cij peut être éventuellement et également sélectionnée parmi plusieurs par l'utilisateur au moyen de l'interface homme/machine de l'équipement informatique.

La représentation peut être par exemple, dans le cas d'une grandeur telle que le cours d'une action, le cours rapporté toutes les 30 minutes accompagné d'un ensemble de deux moyennes mobiles de longueurs différentes ou d'une moyenne pondérée.

L'outil d'administration MA est également chargé d'associer à chaque fenêtre d'affichage Fi un premier outil O1 permettant à l'utilisateur de sélectionner une grandeur Cij parmi plusieurs, et un deuxième outil O2 permettant à l'utilisateur de sélectionner au moins une référence temporelle tk (comme par exemple l'instant de fin (ou final) ou l'instant de début (ou initial) d'une fenêtre d'affichage Fi), ainsi qu'éventuellement (et comme illustré) un quatrième outil O4 permettant à l'utilisateur de sélectionner la représentation d'une grandeur Cij parmi plusieurs.

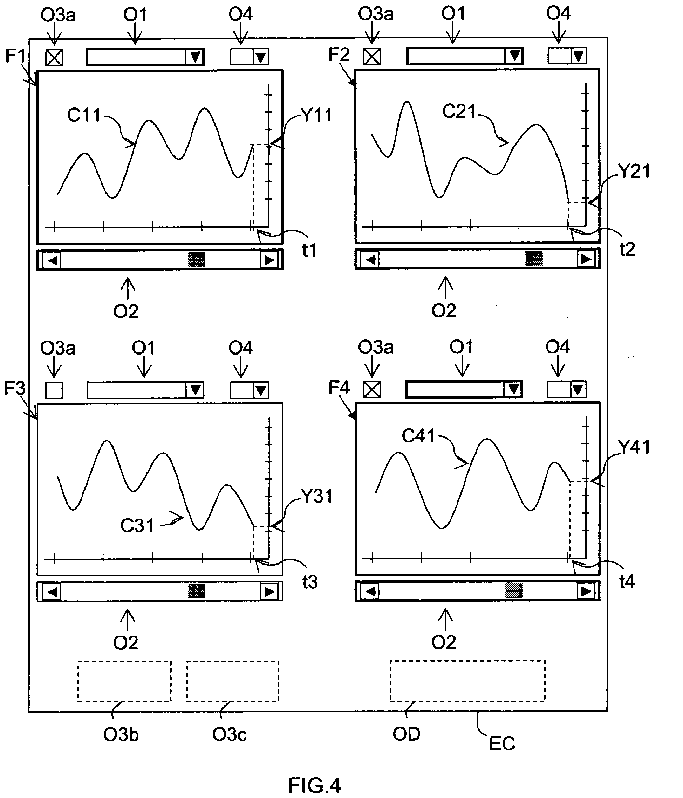

Comme cela est schématiquement illustré sur la figure 4, chacun des premiers O1, deuxièmes O2 et quatrièmes O4 outils se présente, lorsqu'il est affiché sur un écran (EC), sous la forme d'un menu ou d'une case de saisie ou d'un bouton déroulant, et/ou d'une barre de défilement ou d'un bouton de commande de défilement, par exemple.

Plus précisément, dans l'exemple non limitatif illustré sur la figure 4, chaque premier outil O1 associé à une fenêtre d'affichage Fi se présente sous la forme d'une case de saisie déroulante, chaque deuxième outil O2 associé à une fenêtre d'affichage Fi se présente sous la forme d'une case de saisie déroulante, et chaque quatrième outil O4 associé à une fenêtre d'affichage Fi se présente sous la forme d'une barre de défilement.

Comme illustré sur la figure 1, l'outil d'administration MA comprend par exemple un module de gestion MG et des sous-modules de gestion M1, M2 et M4. Les sous-modules de gestion M1, M2 et M4 reçoivent des instructions d'affichage provenant respectivement des premiers O1, deuxièmes O2 et quatrièmes O4 outils qui sont associés aux différentes fenêtres d'affichage Fi utilisées. Ces instructions sont représentatives des sélections effectuées par cet utilisateur pour chaque fenêtre d'affichage Fi qu'il utilise et qui se trouve affichée sur un ou plusieurs écrans EC.

Les sous-modules de gestion M1, M2 et M4 génèrent des demandes destinées au module de gestion MG à partir des instructions reçues. Le module de gestion MG génère des graphes de grandeur(s) destinés à être affichés dans les fenêtres d'affichage Fi utilisées par l'utilisateur, à partir des demandes issues des sous-modules de gestion M1, M2 et M4.

Chaque fenêtre d'affichage Fi est définie par un outil d'affichage (graphique) AG qui reçoit le graphe généré pour sa fenêtre d'affichage Fi par le module de gestion MG.

Selon l'invention, le dispositif d'analyse D comprend également un troisième outil O3, dit de liaison. Ce dernier permet à l'utilisateur qui a déjà sélectionné plusieurs grandeurs Cij et les références temporelles tk associées, ainsi que, éventuellement, les représentations associées, de sélectionner au moins deux des fenêtres d'affichage Fi de ces grandeurs Cij sélectionnées afin de lier entre eux les premiers outils O1 qui leurs sont associés et/ou de lier entre eux les deuxièmes outils O2 qui leurs sont associés.

On notera que la référence O3 n'apparaît pas sur les figures. Il s'agit seulement d'une référence utilisée dans le texte pour désigner plusieurs éléments (ou parties) qui coopèrent ensemble dans le cadre des liaisons et qui sont référencé(e)s ci-après O3a, O3b et O3c.

Ces liaisons entre outils O1 et/ou O2 sont destinées à les contraindre à sélectionner de façon simultanée une même grandeur (O1) ou une même référence temporelle tk. Plus précisément, lorsque l'utilisateur sélectionne une grandeur Cij au moyen de l'un des premiers outils O1 liés au moyen du troisième outil O3, alors dit premier outil maître associé à une fenêtre d'affichage maîtresse, le troisième outil O3 adresse des instructions à l'outil d'administration MA, et plus précisément à son module de gestion MG, de sorte qu'il utilise simultanément la même grandeur Cij au niveau de chaque fenêtre d'affichage dite esclave.

Le troisième outil O3 peut également et éventuellement, dans le même temps, adresser des instructions à l'outil d'administration MA, et plus précisément à son module de gestion MG, de sorte qu'il utilise simultanément la référence temporelle tk de l'une des fenêtres d'affichage sélectionnées Fi dans chacune desdites fenêtres d'affichage sélectionnées.

Il est important de noter qu'il existe des circonstances dans lesquelles les références temporelles ne peuvent pas être les mêmes dans des fenêtres différentes. Par exemple, les indices Nasdaq 100 et Cac 40 ne peuvent être affichés en heure française de façon synchronisée qu'entre 15H30 et 17H30. Plus généralement, des références temporelles affichées ne sont synchrones que lorsque les grandeurs associées sont définies au même moment. La synchronisation temporelle (référence temporelle tk commune) ne peut donc se faire que lorsque c'est possible. Lorsqu'une synchronisation n'est pas possible, une (ou des) représentation(s) reste(nt) en attente jusqu'à ce que la synchronisation redevienne possible.

Par ailleurs, lorsque l'utilisateur sélectionne une référence temporelle (instant final ou instant initial) tk au moyen de l'un des deuxièmes outils O2 liés au moyen du troisième outil O3, alors dit deuxième outil maître associé à une fenêtre d'affichage maîtresse, le troisième outil O3 adresse des instructions à l'outil d'administration MA, et plus précisément à son module de gestion MG, de sorte qu'il utilise simultanément cette même référence temporelle tk au niveau de chacune des fenêtres d'affichage Fi sélectionnées et donc au niveau de celles dites esclaves.

On notera que la référence temporelle tk qui est utilisée en commun dans chacune des fenêtres liées peut par exemple être celle utilisée dans la fenêtre d'affichage liée qui est maîtresse, lorsque l'utilisateur l'a sélectionnée. Lorsque l'on a lié des fenêtres/outils, mais avant toute opération de contrôle, le dispositif D peut forcer chaque fenêtre à utiliser la dernière référence temporelle connue (par exemple l'instant présent) relative à la grandeur déjà présente dans cette fenêtre.

On notera également que l'on peut imposer que la fenêtre maîtresse soit celle qui possède l'indice i de valeur la plus faible parmi les fenêtres liées. Mais, cela n'est pas obligatoire. On peut en effet envisager un mode de réalisation dans lequel la fenêtre maîtresse est celle qui fait l'objet de la première opération de sélection après avoir été liée, ou bien celle qui est choisie à cet effet par l'utilisateur (dans ce cas, on doit prévoir des moyens de sélection additionnels afin de permettre à l'utilisateur de choisir la fenêtre maîtresse).

Comme cela est schématiquement illustré sur la figure 3, le troisième outil O3 comprend par exemple, d'une part, des premières parties O3a qui sont associées respectivement aux fenêtres d'affichage Fi afin de permettre à l'utilisateur de sélectionner certaines au moins d'entre elles en vue de les lier les unes aux autres, et d'autre part, une seconde partie O3b chargée d'effectuer la liaison entre les premiers outils O1 et/ou entre les deuxièmes outils O2 des fenêtres d'affichage Fi sélectionnées au moyen des premières parties O3a. Comme illustré, la seconde partie O3b du troisième outil O3 peut par exemple faire partie de l'outil d'administration MA.

Comme cela est schématiquement illustré sur la figure 4, chacune des premières parties O3a du troisième outil O3 peut par exemple se présenter, lorsqu'elle est affichée sur un écran EC, sous la forme d'une case à cocher. Dans ce cas, lorsque l'utilisateur clique, à l'aide de la souris de l'interface homme/machine, sur une case à cocher O3a, la fenêtre d'affichage Fi associée est immédiatement sélectionnée. Cela se matérialise par exemple par l'apparition d'une croix dans la case à cocher O3a. Mais, tout autre moyen de sélection d'une fenêtre d'affichage Fi peut être envisagé, et notamment un bouton de commande (sur lequel on peut par exemple cliquer pour activer ou désactiver une liaison). On peut également envisager que le fait de cliquer à l'intérieur d'une fenêtre d'affichage Fi entraîne sa sélection (par exemple on peut sélectionner des fenêtres en maintenant enfoncée la touche « Ctrl » du clavier tout en cliquant successivement sur chacune desdites fenêtres à sélectionner (et donc à lier)).

La seconde partie O3b reçoit des instructions de liaison provenant respectivement des premières parties O3a associées aux fenêtres Fi utilisées à un instant donné par l'utilisateur. Ces instructions sont représentatives des sélections de liaison effectuées par cet utilisateur pour chaque fenêtre d'affichage Fi qu'il utilise et qui se trouve affichée sur un ou plusieurs écrans EC. La seconde partie O3b génère des demandes de liaison destinées au module de gestion MG à partir des instructions reçues. Le module de gestion MG génère alors les graphes de grandeur(s) destinés à être affichés dans les fenêtres d'affichage Fi utilisées par l'utilisateur, à partir des demandes issues des sous-modules de gestion M1, M2 et M4, compte tenu des demandes issues de la seconde partie O3b.

On notera que le troisième outil O3 peut par exemple comprendre une troisième partie O3c, couplée à sa seconde partie O3b et agencée, lorsque des premiers outils O1 et/ou des deuxièmes outils O2 de fenêtres d'affichage Fi sélectionnées ont été liés, de manière à provoquer la modification de l'aspect de chaque fenêtre d'affichage Fi sélectionnée et/ou la modification de l'aspect de chaque premier outil O1 lié et/ou de chaque deuxième outil O2 lié. Tel est le cas dans l'exemple non limitatif illustré sur la figure 4. Plus précisément, dans cet exemple le cadre de chaque fenêtre d'affichage sélectionnée (ici F1, F2 et F4), de chaque premier outil O1 lié et de chaque deuxième outil O2 lié est en trait épais afin de mieux différencier les fenêtres d'affichage sélectionnées de celles qui ne le sont pas (ici F3).

Les modifications d'aspect des fenêtres esclaves sont demandées par la troisième partie O3c du troisième outil O3 aux outils d'affichage AG et aux premiers O1, deuxièmes O2 et quatrièmes O4 outils associés aux différentes fenêtres utilisées.

Dans une variante (non représentée), le troisième outil de liaison O3 (et plus précisément sa troisième partie O3c) peut par exemple être agencé(e), lorsque des premiers outils O1 et/ou des deuxièmes outils O2 de fenêtres d'affichage Fi sélectionnées ont été liés, de manière à provoquer la modification de l'aspect de chaque fenêtre d'affichage Fi sélectionnée et/ou la modification de l'aspect de chaque premier outil O1 esclave et/ou de chaque deuxième outil O2 esclave, ainsi que l'inactivation temporaire de chaque premier outil O1 esclave et/ou de chaque deuxième outil O2 esclave.

On entend ici par « outil esclave » un outil qui est contraint à utiliser de façon simultanée une sélection identique à celle effectuée par l'utilisateur avec l'outil maître homologue. Par exemple, si l'utilisateur a lié les fenêtres F1, F2 et F4 au moyen des premières parties O3a associées du troisième outil O3 et qu'il utilise le premier outil O1 de la première fenêtre F1 pour sélectionner une grandeur C1j, alors la fenêtre F1 est la fenêtre maîtresse et le premier outil O1 associé à cette fenêtre F1 est le premier outil maître. Par conséquent, les deux autres fenêtres F2 et F4 sont des fenêtres esclaves et leurs premiers outils O1 sont des premiers outils esclaves contraints à suivre de façon simultanée la sélection effectuée par l'utilisateur au moyen du premier outil maître de la fenêtre maîtresse F1.

Par ailleurs, on entend ici par « inactivation temporaire » le fait de rendre temporairement inactif un premier O1 ou deuxième O2 outil esclave afin que l'utilisateur ne puisse pas l'utiliser pour effectuer une sélection (seul le premier O1 ou deuxième O2 outil maître lié peut alors être utilisé pour effectuer une sélection qui est suivie à l'identique par chaque premier O1 ou deuxième O2 outil esclave lié).

L'inactivation temporaire de chaque premier outil O1 esclave et/ou de chaque deuxième outil O2 esclave peut par exemple être gérée par la troisième partie O3c du troisième outil O3.

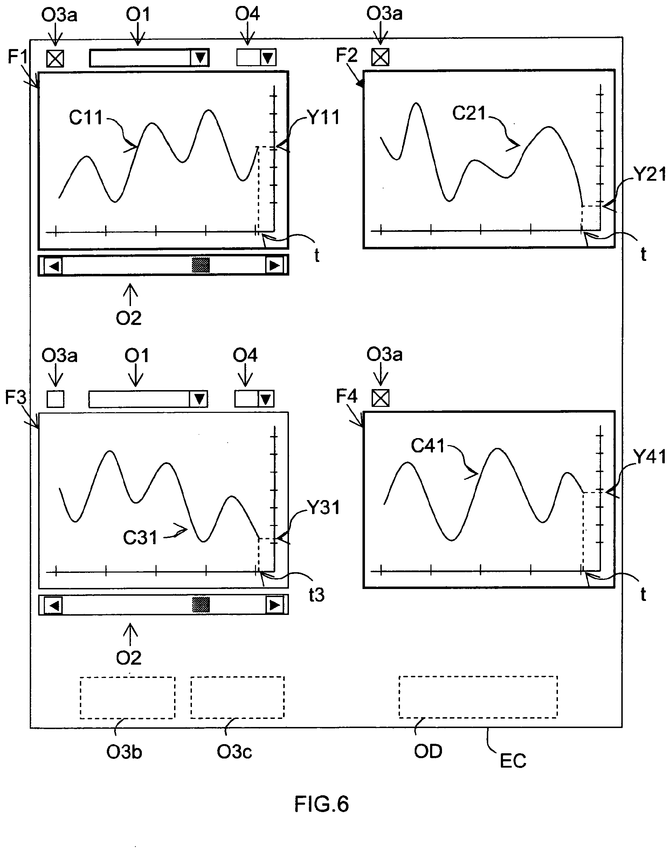

Dans une autre variante illustrée sur la figure 6, le troisième outil de liaison O3 (et plus précisément sa troisième partie O3c) peut par exemple être agencé(e), lorsque des premiers outils O1 et/ou des deuxièmes outils O2 de fenêtres d'affichage Fi sélectionnées ont été liés, de manière à provoquer la suppression de l'affichage des premiers outils O1 esclaves liés et/ou des deuxièmes outils O2 esclaves liés. Dans ce cas, seul(s) le premier outil O1 maître et/ou le deuxième outil O2 maître demeure(nt) affiché(s) et utilisable(s) par l'utilisateur. Les premiers O1 et/ou deuxièmes O2 outils esclaves sont alors respectivement représentés par les premier O1 et/ou deuxième O2 outils maîtres.

Dans l'exemple non limitatif illustré sur la figure 6, le cadre de chaque fenêtre d'affichage sélectionnée (ici F1, F2 et F4) est en trait épais afin de mieux la différencier des fenêtres d'affichage non sélectionnées (ici F3), et seuls les premier O1 et deuxième O2 outils maîtres de la première fenêtre F1 maîtresse sont affichés (les premiers O1 et deuxièmes O2 outils esclaves des fenêtres esclaves F2 et F4 ont été supprimés sur ordre de la troisième partie O3c du troisième outil O3.

Lorsque l'utilisateur décide de désélectionner tout ou partie des fenêtres liées, par exemple en cliquant de nouveau sur les premières parties O3a de ces fenêtres, le troisième outil O3 (et plus précisément sa seconde partie O3b) interrompt (supprime) les liaisons correspondantes entre premiers outils O1 et/ou deuxièmes outils O2. En l'absence de case à cocher, la désélection des fenêtres liées peut se faire en maintenant enfoncée la touche « Ctrl » du clavier tout en cliquant successivement sur chacune desdites fenêtres à désélectionner. Une fois la désélection effectuée, le troisième outil O3 (et plus précisément sa seconde partie O3b) peut par exemple laisser les premiers outils O1 et/ou les deuxièmes outils O2 précédemment liés dans leur état en cours, ou bien il peut laisser les premiers outils O1 précédemment liés dans leur état en cours et provoquer le rétablissement au niveau de chacun des deuxièmes outils O2 précédemment liés de la référence temporelle aux derniers instants connus relatifs à chaque grandeur. Par ailleurs, en cas de suppression de l'affichage de premiers O1 et/ou deuxièmes O2 outils esclaves, le troisième outil O3 (et plus précisément sa troisième partie O3c) provoque leur réaffichage en association avec leurs fenêtres Fi respectives. Lorsque des fenêtres ne sont plus liées, elles sont de nouveau indépendantes les unes des autres.

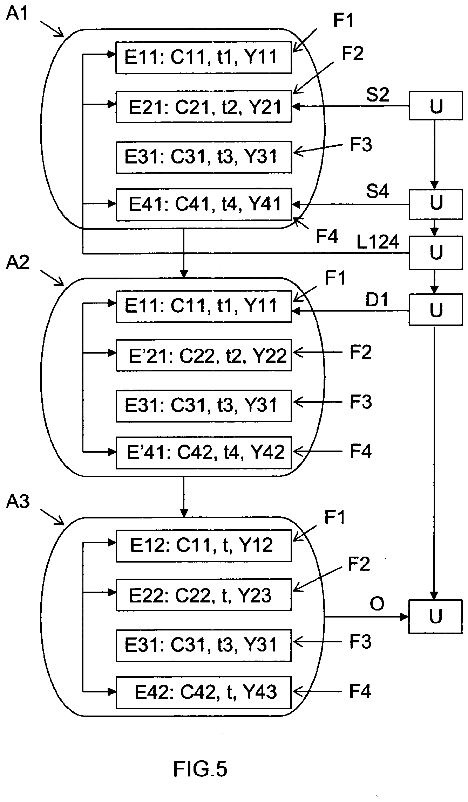

On va maintenant décrire un premier exemple d'utilisation du dispositif d'analyse D selon l'invention en référence à la figure 5.

Dans ce premier exemple, illustrant le premier objectif cité dans la partie introductive, l'utilisateur (U) a initialement sélectionné des représentations de quatre grandeurs différentes et souhaite obtenir une configuration cohérente (O) rapportée à un instant final (référence temporelle) t. Les états initiaux des quatre fenêtres d'affichage Fi (dans lesquelles sont affichées les représentations des quatre grandeurs différentes) sont notés Eij (E11 (C11, t1, Y11), E21 (C21, t2, Y21), E31 (C31, t3, Y31), et E41 (C41, t4, Y41), où Cij désigne une représentation d'une grandeur sélectionnée dans la fenêtre d'affichage Fi, tk désigne la référence temporelle (par exemple l'instant final) de la fenêtre d'affichage Fi, et Yij désigne la valeur de la grandeur Cij à l'instant final tk). L'objectif est ici de passer de la configuration A1 (E11, E21, E31, E41) à une configuration cohérente (O).

Pour ce faire, l'utilisateur (U) doit par exemple effectuer les opérations de contrôle suivantes, au moyen des premiers O1 et deuxièmes O2 outils associés aux quatre fenêtres d'affichage Fi :
- sélections S2 et S4 de deux nouvelles grandeurs C22 et C42 dans les fenêtres F2 et F4, au moyen des premiers outils O1 qui leurs sont associés. Puis liaison (L124) des fenêtres F1, F2 et F4. Cela fournit une deuxième configuration A2 (E11 (C11, t1, Y11), E'21 (C22, t2, Y22), E31 (C31, t3, Y31), et E'41 (C42, t4, Y42)) ;
- sélection D1 d'une référence temporelle (instant final) t dans la fenêtre F1 placée dans l'état E11 et associée à la grandeur C11. Les fenêtres F1, F2 et F4 étant liées, cette sélection D1 entraîne la sélection de façon simultanée de la même référence temporelle (instant final) t au niveau des deuxièmes outils O2 associés aux fenêtres F2 et F4. Cela fournit une troisième configuration cohérente A3 (E12 (C11, t, Y12), E22 (C22, t, Y23), E31 (C31, t3, Y31), et E42 (C42, t, Y43)), référencée (O).

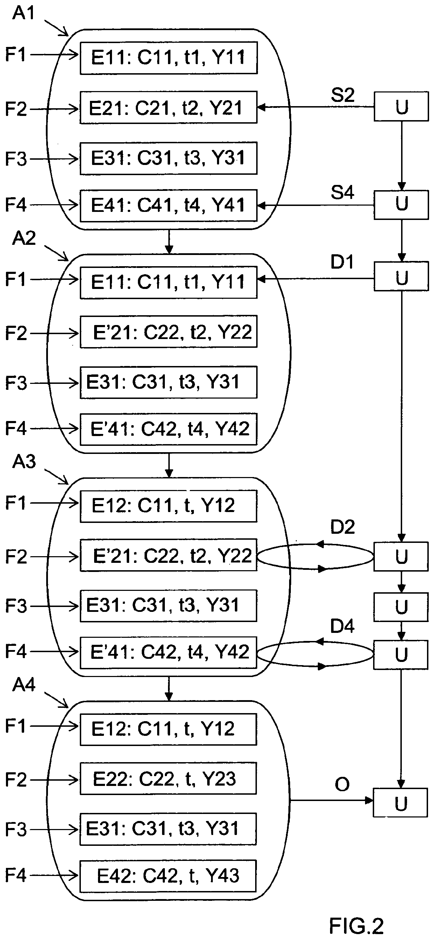

Comme on peut le constater en comparant les suites d'opérations illustrées sur les figures 2 (art antérieur) et 5 (invention), lesquelles permettent d'aboutir à une même configuration cohérente (O) en partant d'une même configuration initiale A1, l'invention permet d'éliminer les opérations successives D2 et D4 de sélection de la référence temporelle t au niveau des fenêtres F2 et F4.

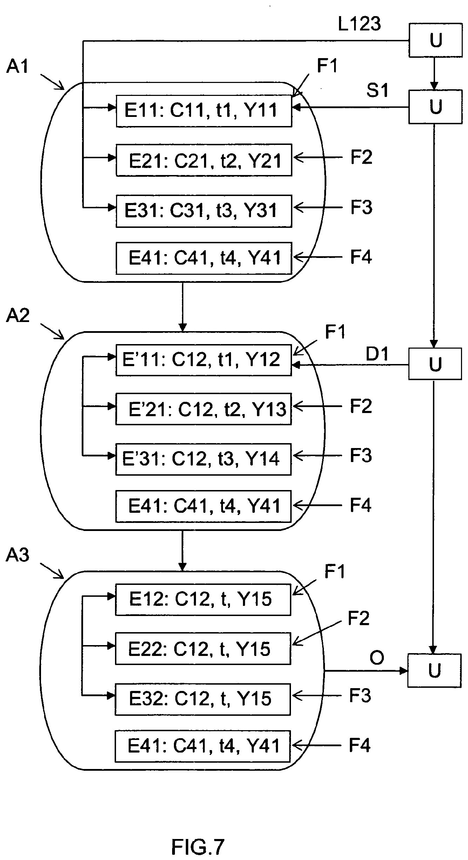

On va maintenant décrire un second exemple d'utilisation du dispositif d'analyse D selon l'invention en référence à la figure 7.

Dans ce second exemple, illustrant le second objectif cité dans la partie introductive, l'utilisateur a également initialement sélectionné des représentations de quatre grandeurs différentes et souhaite obtenir une configuration cohérente (O) rapportée à un instant final t. Les états initiaux des quatre fenêtres d'affichage Fi sont identiques à ceux du premier exemple décrit ci-avant. (A1 (E11 (C11, t1, Y11), E21 (C21, t2, Y21), E31 (C31, t3, Y31), et E41 (C41, t4, Y41)).

L'utilisateur effectue par exemple les opérations de contrôle suivantes, au moyen des premiers O1 et deuxièmes O2 outils associés aux quatre fenêtres d'affichage Fi :
- liaison (L123) des fenêtres F1, F2 et F3. Puis, sélection S1 d'une nouvelle grandeur C12 dans la fenêtre F1, au moyen du premier outil O1 qui lui est associé. Les fenêtres F1, F2 et F3 étant liées, cette sélection S1 entraîne la sélection de façon simultanée de la même grandeur C12 au niveau des premiers outils O1 associés aux fenêtres F2 et F3. Cela fournit une deuxième configuration A2 (E'11 (C12, t1, Y12), E'21 (C12, t2, Y13), E'31 (C12, t3, Y14), et E41 (C41, t4, Y41)) ;
- sélection D1 d'une référence temporelle (instant final) t dans la fenêtre F1 placée dans l'état E'11 et associée maintenant à la grandeur C12. Les fenêtres F1, F2 et F3 étant liées, cette sélection D1 entraîne la sélection de façon simultanée de la même référence temporelle (instant final) t au niveau des deuxièmes outils O2 associés aux fenêtres F2 et F3. Cela fournit une troisième configuration cohérente A3 (E12 (C12, t, Y15), E22 (C12, t, Y15), E32 (C12, t, Y15), et E41 (C41, t4, Y41)), référencée (O). Les états E12, E22 et E32 correspondant tous les trois à des représentations à priori différentes d'une même grandeur, elles correspondent également à une même valeur finale Y15 de la grandeur C12 puisqu'elles ont un même instant final commun t.

On notera que l'opération de sélection D1 peut être effectuée indifféremment sur la fenêtre F1, F2 ou F3. Par ailleurs, les opérations de sélection S1 et D1 peuvent être faites dans n'importe quel ordre.

L'invention ne se limite pas aux modes de réalisation de dispositif d'analyse et de support de stockage décrits ci-avant, seulement à titre d'exemple, mais elle englobe toutes les variantes que pourra envisager l'homme de l'art dans le cadre des revendications ci-après.

## Revendications

1. Dispositif (D) d'analyse de fichiers de données représentatives de valeurs prises par des grandeurs variant dans le temps destiné à être implanté dans un équipement informatique comprenant au moins un écran d'affichage, ledit dispositif (D) comprenant un outil d'administration de fenêtres d'affichage (MA), chaque fenêtre d'affichage étant, d'une part, destinée à afficher une représentation d'une grandeur sélectionnée, et d'autre part, associée à un premier outil de sélection de grandeur (O1) et un deuxième outil de sélection de référence(s) temporelle(s) (02), couplés audit outil d'administration (MA), **caractérisé en ce qu'**il comprend un éventuel quatrième outil de sélection de représentation (O4) et un troisième outil de liaison (03) agencé pour permettre à un utilisateur, ayant sélectionné plusieurs arandeurs. les références temporelles associées et les représentations associées, de sélectionner au moins deux des fenêtres d'affichage des grandeurs sélectionnées, puis pour lier ensemble les premiers outils (O1) et/ou les deuxièmes outils (02) et/ou les quatrièmes outils (04) des fenêtres d'affichage sélectionnées, de sorte qu'une sélection d'une grandeur effectuée par l'utilisateur au moyen de l'un des premiers outils liés (01), dit maître et associé à une fenêtre d'affichage maîtresse, induise une sélection de grandeur identique par ledit outil d'administration (MA) au niveau de chaque fenêtre d'affichage dite esclave, et/ou qu'une sélection de référence temporelle effectuée par l'utilisateur au moyen de l'un des deuxièmes outils liés (02), dit maître et associé à une fenêtre d'affichage maîtresse, induise une sélection de référence temporelle identique par ledit outil d'administration (MA) au niveau de chaque fenêtre d'affichage esclave et/ou qu'une sélection de représentation effectuée par l'utilisateur au moyen de l'un des quatrièmes outils liés (04), dit maître et associé à une fenêtre d'affichage maîtresse, induise une sélection de représentation identique par ledit outil d'administration (MA) au niveau de chaque fenêtre d'affichage esclave.

2. Dispositif selon la revendication 1, **caractérisé en ce que** ledit troisième outil de liaison (03) est agencé pour qu'une sélection d'une grandeur, effectuée par l'utilisateur au moyen d'un premier outil lié (O1) maître, induise une sélection de grandeur identique par ledit outil d'administration (MA) au niveau de chaque fenêtre d'affichage esclave, ainsi que la sélection par ledit outil d'administration (MA) de la référence temporelle de l'une des fenêtres d'affichage sélectionnées au niveau de chaque fenêtre d'affichage esclave.

3. Dispositif selon la revendication 1, **caractérisé en ce que** ledit troisième outil de liaison (03) est agencé pour qu'une sélection d'une grandeur, effectuée par l'utilisateur au moyen d'un premier outil lié (01) maître, induise une sélection de grandeur identique par ledit outil d'administration (MA) au niveau de chaque fenêtre d'affichage esclave, ainsi que l'utilisation par ledit outil d'administration (MA) du dernier instant connu de chaque grandeur sélectionnée comme référence temporelle au niveau de chacune desdites fenêtres d'affichage sélectionnées.

4. Dispositif selon l'une des revendications 1 à 3, **caractérisé en ce que** ledit troisième outil de liaison (03) est agencé pour provoquer l'utilisation de la référence temporelle de la fenêtre d'affichage maîtresse par chaque fenêtre d'affichage esclave.

5. Dispositif selon l'une des revendications 1 et 2, **caractérisé en ce que** ledit troisième outil de liaison (03) est agencé pour provoquer l'utilisation de la référence temporelle la plus récente parmi les références temporelles desdites fenêtres d'affichage sélectionnées au moyen des deuxièmes outils (02) liés.

6. Dispositif selon l'une des revendications 1 à 5, **caractérisé en ce que** chaque référence temporelle est choisie dans un groupe comprenant l'instant de début de la fenêtre d'affichage et l'instant de fin de la fenêtre d'affichage.

7. Dispositif selon l'une des revendications 1 à 6, **caractérisé en ce que** ledit troisième outil de liaison (03) est agencé, en cas de liaison de premiers outils (01) de fenêtres d'affichage sélectionnées, pour provoquer la suppression de l'affichage des premiers outils esclaves liés (O1), ces derniers étant alors représentés par le premier outil maître lié.

8. Dispositif selon l'une des revendications 1 à 6, **caractérisé en ce que** ledit troisième outil de liaison (03) est agencé, en cas de liaison de deuxièmes outils (02) de fenêtres d'affichage sélectionnées, .pour provoquer la suppression de l'affichage des deuxièmes outils esclaves liés (02), ces derniers étant alors représentés par le deuxième outil maître lié.

9. Dispositif selon l'une des revendications 1 à 6, **caractérisé en ce que** ledit troisième outil de liaison (03) est agencé, en cas de liaison de premiers outils (O1) et/ou de deuxièmes outils (02) de fenêtres d'affichage sélectionnées, pour provoquer une modification de l'aspect de chaque fenêtre d'affichage sélectionnée et/ou une modification de l'aspect de chaque premier outil lié (01) et/ou de chaque deuxième outil lié (02).

10. Dispositif selon l'une des revendications 1 à 6, **caractérisé en ce que** ledit troisième outil de liaison (03) est agencé, en cas de liaison de premiers outils (01) et/ou de deuxièmes outils (02) de fenêtres d'affichage sélectionnées, pour provoquer une modification de l'aspect des fenêtres d'affichage esclaves et/ou une modification de l'aspect et une inactivation temporaire de chaque premier outil esclave (01) et/ou de chaque deuxième outil esclave lié (02).

11. Dispositif selon l'une des revendications 1 à 10, **caractérisé en ce que** ledit troisième outil de liaison (03) est agencé, en cas de désélection desdites fenêtres d'affichage maîtresse et esclaves, pour interrompre les liaisons correspondantes entre premiers outils liés (O1) et/ou entre deuxièmes outils liés (02).

12. Dispositif selon la revendication 11, **caractérisé en ce que** ledit troisième outil de liaison (03) est agencé, après interruption des liaisons correspondantes entre premiers outils liés (01) et/ou entre deuxièmes outils liés (02), pour provoquer le rétablissement de la référence temporelle qui a été sélectionnée avant l'établissement de la liaison de chaque grandeur au niveau de chacun des deuxièmes outils (02) précédemment liés.

13. Dispositif selon la revendication 11, **caractérisé en ce que** ledit troisième outil de liaison (03) est agencé, après interruption des liaisons correspondantes entre premiers outils liés (O1) et/ou entre deuxièmes outils liés (02), pour provoquer la sélection de la dernière référence temporelle connue de chaque grandeur au niveau de chacun des deuxièmes outils (02) précédemment liés.

14. Support de stockage de fichiers de données définissant des programmes pour un équipement informatique, **caractérisé en ce qu'**il stocke un dispositif d'analyse (D) selon l'une des revendications précédentes, agencé sous la forme de programmes.

## Patentansprüche

1. Vorrichtung (D) zur Analyse von Dateien, die aus Daten bestehen, die Werte von zeitlich veränderlichen Größen repräsentieren, und die dazu bestimmt sind, in eine Datenverarbeitungsanlage mit mindestens einem Anzeigeschirm implementiert zu werden, wobei die Vorrichtung (D) ein Werkzeug zur Verwaltung von Anzeigefenstern (MA) umfasst, wobei jedes Anzeigefenster erstens dazu bestimmt ist, eine Darstellung einer ausgewählten Größe anzuzeigen, und drittens mit einem ersten Größenauswahlwerkzeug (01) und einem zweiten Werkzeug zur Auswahl einer oder mehrerer Zeitreferenzen (02) verbunden ist, die beide mit dem genannten Verwaltungswerkzeug (MA) gekoppelt sind, **dadurch gekennzeichnet, dass** es ein optionales viertes Werkzeug zur Auswahl einer Darstellung (04) und ein drittes Verknüpfungswerkzeug (03) umfasst, wobei das Verknüpfungswerkzeug so angeordnet ist, dass es einem Benutzer, der mehrere Größen, die zugehörigen Zeitreferenzen und mögliche zugehörige Darstellungen ausgewählt hat, ermöglicht, mindestens zwei der Anzeigefenster der ausgewählten Größen auszuwählen, und dann für die Verknüpfung der ersten Werkzeuge (O1) und/oder der zweiten Werkzeuge (O2) und/oder der vierten Werkzeuge (04) der ausgewählten Anzeigefenster, so dass eine Auswahl in einer Größen, die vom Benutzer mittels eines der verknüpften ersten Werkzeuge (01), das als Master bezeichnet wird, durchgeführt wird, und einem Master-Anzeigefenster zugeordnet ist, induziert eine Auswahl identischer Größen durch das genannte Verwaltungswerkzeug (MA) auf der Ebene jedes Anzeigefensters, das Slave genannt wird, und/oder eine Zeitreferenzauswahl, die vom Benutzer mit Hilfe eines der zweiten verbundenen Werkzeuge (02) getroffen wird, das Master genannt wird und einem Master-Anzeigefenster zugeordnet ist, eine identische Zeitreferenzauswahl durch das Verwaltungswerkzeug (MA) auf der Ebene jedes Slave-Anzeigefensters induziert und/oder eine Darstellungsauswahl, die vom Benutzer mittels eines der vierten verknüpften Werkzeuge (04) getroffen wird, das Master genannt wird und einem Master-Anzeigefenster zugeordnet ist, eine identische Darstellungsauswahl durch das Verwaltungswerkzeug (MA) auf der Ebene jedes Slave-Anzeigefensters induziert.

2. Vorrichtung nach Anspruch 1, **dadurch gekennzeichnet, dass** das dritte Verknüpfungswerkzeug (03) so angeordnet ist, dass eine Auswahl einer Größe, die durch den Benutzer mittels eines ersten Größenauswahl-Werkzeugs (O1), Master, verknüpft, durchgeführt wird, eine Auswahl identischer Größe durch das Verwaltungswerkzeug (MA) auf der Ebene jedes untergeordneten Anzeigefensters sowie die Auswahl des Zeitbezugs eines der auf der Ebene jedes untergeordneten Anzeigefensters ausgewählten Anzeigefensters durch das Verwaltungswerkzeug (MA) induziert.

3. Vorrichtung nach Anspruch 1, **dadurch gekennzeichnet, dass** das dritte Verknüpfungswerkzeug (03) so angeordnet ist, dass eine Auswahl einer Größe, die vom Benutzer mittels eines ersten Größenauswahl-Werkzeugs (O1), dem verknüpften Master-Werkzeugs, vorgenommen wird, eine Auswahl einer identischen Größe durch das Verwaltungswerkzeug (MA) auf der Ebene jedes untergeordneten Anzeigefensters induziert, sowie die Verwendung, dank des Verwaltungswerkzeugs (MA), des letzten bekannten Zeitpunkts jeder ausgewählten Größe als Zeitreferenz auf der Ebene jedes der ausgewählten Anzeigefenster.

4. Vorrichtung nach einem der Ansprüche 1 bis 3, **dadurch gekennzeichnet, dass** das dritte Verknüpfungswerkzeug (03) so angeordnet ist, dass es die Verwendung der Zeitreferenz des Master-Anzeigefensters durch jedes Slave-Anzeigefenster induziert.

5. Appareil selon l'une des revendications 1 et 2, **caractérisé en ce que** le troisième outil de liaison (03) est agencé pour provoquer l'utilisation de la plus récente des références temporelles des fenêtres d'affichage sélectionnées au moyen des deuxièmes outils (02) lies.

6. Vorrichtung nach einem der Ansprüche 1 bis 5, **dadurch gekennzeichnet, dass** jede Zeitreferenz aus einer Gruppe ausgewählt wird, die die Startzeit des Anzeigefensters und die Endzeit des Anzeigefensters umfasst.

7. Vorrichtung nach einem der Ansprüche 1 bis 6, **dadurch gekennzeichnet, dass** das genannte dritte Verknüpfungswerkzeug (03) so angeordnet ist, dass es im Falle der Verknüpfung erster Werkzeuge (O1) ausgewählter Anzeigefenster die Unterdrückung der Anzeige der verknüpften ersten Slave-Werkzeuge (O1) bewirkt, wobei letztere dann durch das verknüpfte erste Master-Werkzeug dargestellt werden.

8. Vorrichtung nach einem der Ansprüche 1 bis 6, **dadurch gekennzeichnet, dass** das besagte dritte Verknüpfungswerkzeug (03) so angeordnet ist, dass es im Falle der Verknüpfung von zweiten Werkzeugen (02) von ausgewählten Anzeigefenstern die Unterdrückung der Anzeige der verknüpften zweiten Slave-Werkzeuge (02) bewirkt, wobei letztere dann durch das verknüpfte zweite Master-Werkzeug dargestellt werden.

9. Vorrichtung nach einem der Ansprüche 1 bis 6, **dadurch gekennzeichnet, dass** das dritte Verknüpfungswerkzeug (03) so angeordnet ist, dass es im Falle der Verknüpfung von ersten Werkzeugen (O1) und/oder zweiten Werkzeugen (02) von ausgewählten Anzeigefenstern eine Änderung des Aussehens jedes ausgewählten Anzeigefensters und/oder eine Änderung des Aussehens jedes verknüpften ersten Werkzeugs (O1) und/oder jedes verknüpften zweiten Werkzeugs (02) bewirkt.

10. Vorrichtung nach einem der Ansprüche 1 bis 6, **dadurch gekennzeichnet, dass** das dritte Verknüpfungswerkzeug (03) so angeordnet ist, dass es im Falle der Verknüpfung erster Werkzeuge (O1) und/oder zweiter Werkzeuge (02) ausgewählter Anzeigefenster eine Änderung des Aussehens der Nebenanzeigefenster und/oder eine Änderung des Aussehens und eine vorübergehende Inaktivierung jedes ersten Slave-Werkzeuge (O1) und/oder jedes verknüpften zweiten Slave-Werkzeuge (02) bewirkt.

11. Vorrichtung nach einem der Ansprüche 1 bis 10, **dadurch gekennzeichnet, dass** das dritte Verknüpfungswerkzeug (03) so angeordnet ist, dass es im Falle der Abwahl der Master- und Slave-Anzeigefenster die entsprechenden Verknüpfungen zwischen ersten verknüpften Werkzeugen (01) und/oder zwischen zweiten verknüpften Werkzeugen (02) unterbricht.

12. Vorrichtung nach Anspruch 11, **dadurch gekennzeichnet, dass** das dritte Verknüpfungswerkzeug (03) so angeordnet ist, dass es nach Unterbrechung der entsprechenden Verknüpfungen zwischen ersten verknüpften Werkzeugen (O1) und/oder zwischen zweiten verknüpften Werkzeugen (02) die Wiederherstellung der Zeitreferenz bewirkt, die vor der Verknüpfung jeder Größe in jedem der zuvor verknüpften zweiten Werkzeuge (02) gewählt wurde.

13. Vorrichtung nach Anspruch 11, **dadurch gekennzeichnet, dass** das dritte Verknüpfungswerkzeug (03) so angeordnet ist, dass es nach Unterbrechung der entsprechenden Verknüpfungen zwischen ersten verknüpften Werkzeugen (O1) und/oder zwischen zweiten verknüpften Werkzeugen (02) die Auswahl der letzten bekannten Zeitreferenz jeder Größen bei jedem der zuvor verknüpften zweiten Werkzeuge (02) bewirkt.

14. Speichermedium zum Speichern von Dateien, die Programme für Computerausrüstung definieren, **dadurch gekennzeichnet, daß** es eine Analysevorrichtung (D) gemäß einem der vorhergehenden Ansprüche speichert, die in Form von Programmen realisiert ist.

## Claims

1. A device (D) for analysing data files representative of values assumed by quantities that vary over time intended to be installed in computer equipment comprising at least one display screen, said device (D) comprising a display window management tool (MA), each display window being, firstly, intended to display a representation of a selected quantity, and, secondly, associated with a first quantity selecting tool (O1) and a second time reference selecting tool (02), coupled to said management tool (MA), **characterised in that** it comprises an optional fourth representation selecting tool (04) and a third linking tool (03) arranged so as to enable a user, who has selected a number of quantities, the associated time references and the associated representations, to select at least two of the display windows of the selected quantities, then to link together the first tools (O1) and/or the second tools (02) and/or the fourth tools (04) of the selected display windows, so that the selection of a quantity by the user using one of the linked first tools (O1), referred to as master and associated with a master display window, results in the selection of the same quantity by said management tool (MA) on each display window referred to as slave, and/or the selection of a time reference by the user using one of the linked second tools (02), referred to as master and associated with a master display window, results in the selection of the same time reference by said management tool (MA) on each slave display window, and/or the selection of a representation by the user using one of the linked fourth tools (04), referred to as master and associated with a master display window, results in the selection of the same representation by the said management tool (MA).

2. A device according to claim 1, **characterised in that** said third linking tool (03) is arranged so that the selection of a quantity by the user by means of a master linked first tool (O1) results in the selection of the same quantity by said management tool (MA) on each slave display window, as well as the selection by said management tool (MA) of the time reference of one of the selected display windows on each slave display window.

3. A device according to claim 1, **characterised in that** said third linking tool (03) is arranged so that the selection of a quantity by the user by means of a master linked first tool (O1) results in the selection of the same quantity by said management tool (MA) on each slave display window, as well as the use by said management tool (MA) of the last known instant of each selected quantity as a time reference on each of the said selected display windows.

4. A device according to one of claims 1 to 3, **characterised in that** said third linking tool (03) is arranged so as to result in the use of the time reference of the master display window by each slave display window.

5. A device according to one of claims 1 to 2, **characterised in that** said third linking tool (03) is arranged so as to result in the use of the most recent time reference among the time references of the display windows selected by means of the linked second tools (02).

6. A device according to one of claims 1 to 5, **characterised in that** each time reference is selected from a group comprising the beginning instant of the display window and the ending instant of the display window.

7. A device according to one of claims 1 to 6, **characterised in that** said third linking tool (03) is arranged, in the case of the linking of first tools (01) of selected display windows, so as to induce the suppression of the displaying of the linked slave first tools (O1), the latter then being represented by the linked master first tool.

8. A device according to one of claims 1 to 6, **characterised in that** said third linking tool (03) is arranged, in the case of the linking of second tools (02) of selected display windows, so as to induce the suppression of the displaying of the linked slave second tools (02), the latter then being represented by the linked master second tool.

9. A device according to one of claims 1 to 6, **characterised in that** said third linking tool (03) is arranged, in the case of the linking of first tools (01) and/or second tools (02) of selected display windows, so as to induce a change in the appearance of each selected display window and/or a change in the appearance of each linked first tool (O1) and/or each linked second tool (02).

10. A device according to one of claims 1 to 6, **characterised in that** said third linking tool (03) is arranged, in the case of the linking of first tools (O1) and/or second tools (02) of selected display windows, so as to induce a change in the appearance of the slave windows and/or a change in the appearance and temporary inactivation of each slave first tool (O1) and/or each linked slave second tool (02).

11. A device according to one of claims 1 to 10, **characterised in that** said third linking tool (03) is arranged, in the case of deselection of said master and slave display windows, so as to cease the corresponding linking between linked first tools (O1) and/or between linked second tools (02).

12. A device according to claim 11, **characterised in that** said third linking tool (03) is arranged, after the termination of the corresponding linking between linked first tools (O1) and/or between linked second tools (02), so as to induce the restoration of the time reference, which was selected before the establishment of the linking of each quantity, on each of the second tools (02) previously linked.

13. A device according to claim 11, **characterised in that** said third linking tool (03) is arranged, after the termination of the corresponding linking between linked first tools (O1) and/or between linked second tools (02), so as to induce the selection of the last known time reference for each quantity on each of the second tools (02) previously linked.

14. A storage medium for data files defining programs for computer equipment, **characterised in that** it stores an analysis device (D) according to one of the preceding claims, arranged in the form of programs.
